# EUROPÄISCHE PATENTSCHRIFT

(11) **EP 2 349 741 B1**
(45) Veröffentlichungstag und Bekanntmachung des Hinweises auf die Patenterteilung: **08.01.2014**
(21) Anmeldenummer: 09799510.4
(22) Anmeldetag: 26.11.2009
(51) Int. Cl.: B60B 27/00, F16C 35/067, F16C 35/077

(54) **RADTRÄGER EINES KRAFTFAHRZEUGES**
WHEEL CARRIER OF A MOTOR VEHICLE
SUPPORT DE ROUE DE VÉHICULE À MOTEUR

(30) Priorität: 27.11.2008 DE 102008044136
(43) Veröffentlichungstag der Anmeldung: 03.08.2011
(73) Patentinhaber: ZF Friedrichshafen AG, 88038 Friedrichshafen (DE)
(72) Erfinder: WERRIES, Hartmut, 49143 Bissendorf (DE); ERSOY, Metin, 65396 Walluf (DE)
(86) Internationale Anmeldenummer: PCT/DE2009/050065
(87) Internationale Veröffentlichungsnummer: WO 2010/060424

(56) Entgegenhaltungen:
- WO-A1-03/000508
- DE-A1- 10 150 613
- DE-A1-102005 032 888
- US-A1- 2002 015 545

## Beschreibung

Die Erfindung betrifft einen Radträger eines Kraftfahrzeuges nach dem Oberbegriff des Patentanspruches 1.

Zur Gewichtseinsparung wird bei der Herstellung von Kraftfahrzeugen vermehrt dazu übergegangen, Einzelteile oder ganze Baugruppen aus Leichtmetallwerkstoffen herzustellen. Als Leichtmetallwerkstoffe kommen dabei zumeist Magnesium oder Aluminium zum Einsatz.

Aus der DE 10 2005 032 888 A1 ist zum Beispiel ein Radträger bekannt, der insgesamt aus dem Leichtmetall Aluminium hergestellt wurde. Ein wesentliches Problem stellt dabei jedoch die Verbindung des Radlagers mit dem aus einem Leichtmetall hergestellten Radträger dar, weil die unterschiedlichen Materialien des Radträgers und des Radlagers verschiedene Wärmeausdehnungskoeffizienten haben und zudem unterschiedliche Festigkeitswerte aufweisen. Dies kann im Extremfall dazu führen, dass sich das Radlager in dem Radträger lockert und axial auswandert oder sich in Umfangsrichtung bewegt, was zumindest störende Geräusche im Bereich der Radaufhängung zur Folge hat. Um dies zu verhindern, ist es aus der DE 10 2005 032 888 A1 bekannt, Sicherungsringe vorzusehen, die das Radlager in dem Radträger fixieren. Dabei geht die Lösung der Schrift dahin, wenigstens einen Sicherungsring vorzusehen, der unter einem Reibschluss und/oder einem Formschluss in den Außenring des Radlagers eingesetzt wird, wobei auch zwischen dem umgebenden Bauteil, also dem Radträger, und dem Sicherungsring ein Reibschluss vorhanden ist. Der Sicherungsring kann darüber hinaus eine Kegelform beziehungsweise eine mit Bezug zur Rotationsachse ansteigende oder gewölbte Kontur aufweisen, um durch die sich einstellende Keilwirkung zwischen Radlager und Radträger eine Relativbewegung des Radlagers zu vermeiden.

Bei der aus der DE 10 2005 032 888 A1 bekannten Lösung ist die Montage des Radlagers im Radträger dadurch erschwert, dass jeder Sicherungsring zunächst in den Außenring des Radlagers eingelegt werden muss, bevor das Radlager in den Radträger integrierbar ist. Praktisch lässt sich dieses Problem kaum ohne eine thermische Behandlung der Bauelemente umsetzen. Dies hat zur Folge, dass die Herstellung der Bauelemente und ihre Montage einen erheblichen Aufwand erfordern.

Gattungsgemäße Radträger in einer aus Aluminiumguss bestehenden und anschließend zusätzlich geschmiedeten Ausführung, bei denen zwischen dem Außenring des Radlagers und der Innenoberfläche der Ausnehmung ein Stahlzwischenring eingesetzt ist, sind bereits in Fahrzeugen im Einsatz. Dabei gestaltet sich jedoch das Gießen und das anschließende Schmieden des Radträgers sowie das Einsetzen des Stahlzwischenringes sehr aufwendig.

Der Erfindung liegt die Aufgabe zugrunde, eine möglichst einfache und fertigungstechnisch unkomplizierte Lösung für die Verbindung eines Radlagers mit einem Radträger eines Kraftfahrzeuges bereitzustellen, die eine zuverlässige Fixierung des Radlagers innerhalb des Radträgers gestattet, sodass keine Relativbewegungen zwischen Radlager und Radträger auftreten.

Die Erfindung löst diese Aufgabenstellung mit den Merkmalen des Patentanspruches 1.
Weitere Ausgestaltungen der Erfindung sind Gegenstand der sich anschließenden Unteransprüche.

Gemäß dem Stand der Technik (siehe z.B. WO 03/000 508 oder DE 10150613) werden oft zur Verbindung zwischen Radträger und Radlager entlang des Umfanges des Radlagers nur partiell Umformungen des Randabschnittes des Radträgers vorgenommen. Dadurch kann eine Fixierung des Radlagers gegen ein axiales Auswandern aus dem Radträger erfolgen und es ist zudem möglich, Relativbewegungen in Umfangsrichtung des Radlagers, das heißt, unerwünschte Rotationsbewegungen des Radlagers innerhalb des Radträgers, zu vermeiden. Gedacht ist hierbei zum Beispiel an ein in Umfangsrichtung betrachtet, verzahnungsartiges Ineinandergreifen zwischen Radträger und Radlager. Die Umformung am Radträger kann jedoch auch vollständig entlang des Radlagers umlaufen. Dadurch kann der bei bekannten Lösungen erforderliche Schmiedevorgang des Radträgers entfallen, wodurch eine zusätzliche Vereinfachung gegeben ist.

Die Befestigung des Außenringes eines Radlagers am Radträger über die partielle Umformung eines Teilbereiches eines Randabschnittes der Ausnehmung bietet sich deshalb an, weil der umgekehrte Fall, nämlich die Befestigung am Innenring des Radlagers mit einem höheren Aufwand verbunden ist. Dies stellt eine besonders einfache Befestigung des Radlagers in der Ausnehmung des Radträgers dar.

Erfindungsgemäß wird zwischen dem Außenring des Radlagers und der Innenoberfläche der Ausnehmung ein Zwischenring eingesetzt. Dieser Zwischenring weist eine größere Breite als das Radlager auf und nimmt somit das Radlager vollständig auf. Hier besteht ein ganz wesentlicher Unterschied zu den im Zusammenhang mit der Erläuterung des Standes der Technik erwähnten Ausführungen, bei denen Sicherungsringe zur Fixierung des Radlagers zum Einsatz kommen. Mit dieser sehr sinnvollen Ausgestaltung der Erfindung ist nämlich die Fertigung und die Montage des Radlagers im Radträger entscheidend vereinfacht worden. Zudem ermöglicht die Verwendung eines Zwischenringes als mittelbare Befestigung des Radlagers innerhalb des Radträgers die Fixierung des Radlagers über dessen gesamte Breite. Aber neben den bereits erwähnten Vorteilen bietet die Lösung auch die Möglichkeit eines sehr einfachen Austausches des Radlagers für den Reparaturfall. Das Radlager muss nicht aus dem Leichtmetall-Radträger herausgetrennt werden, was unter Umständen zu Zerstörungen der Innenoberfläche der Ausnehmung führen könnte, sondern kann in einfacher Weise aus dem Zwischenring entfernt werden. Ein wesentlicher Vorteil besteht also hierbei darin, dass nicht der gesamte Radträger inklusive des darin vorhandenen Radlagers ausgewechselt werden muss. Dies hat für den Kunden erhebliche Kostenvorteile und erleichtert zudem dem Werkstattpersonal die Austauschbarkeit der Radlager.

Zur mittelbaren Befestigung des Radlagers im Radträger ist erfindungsgemäß der Zwischenring durch die Umformung des Randabschnittes der Ausnehmung fixiert. Dies ermöglicht beispielsweise den Zwischenring zusammen mit dem Radlager als vormontierte Baueinheit herzustellen und den Zwischenring zusammen mit dem bereits integrierten Radlager in die korrespondierende Ausnehmung des Radträgers einzusetzen. Ein wesentlicher Vorteil einer vormontierbaren Baueinheit zeigt sich in der Möglichkeit, bauteilbedingte Toleranzen, insbesondere zwischen Radlager und Zwischenring, ausgleichen zu können, was zu einer verbesserten Qualität erfindungsgemäßer Radträger führt.

Erfindungsgemäß ist das Radlager zusätzlich durch einen Sicherungsring in dem Zwischenring fixiert.

Um die Verbindung des Zwischenringes mit dem Radträger zu vereinfachen und damit auch die Montage zu erleichtern, geht ein Vorschlag dahin, dass der Zwischenring aus einem im Vergleich zu dem leichtmetallischen Werkstoff des Radträgers höherfesteren Material besteht. Geeignet könnten hierzu beispielsweise Werkstoffe wie Stahl sein, so dass der Zwischenring aus einem Stahlwerkstoff und der Radträger beispielsweise aus Aluminium erzeugt wird.

Zur Vermeidung von Relativbewegungen zwischen dem Zwischenring und dem diesen aufnehmenden Radträger ist es von Vorteil, wenn der Zwischenring mittels einer Passung in die Ausnehmung des Radträgers eingesetzt ist. Bei dieser Passung ist es erfindungsgemäß möglich, Übergangspassungen oder bevorzugt Presspassungen vorzusehen und den Zwischenring mittels einer dieser Passungen in die Ausnehmung des Radträgers einzuführen.

Um den Festsitz des Zwischenringes in der Ausnehmung des Radträgers zu verbessern, geht ein Vorschlag dahin, dass der Zwischenring an seiner Außenmantelfläche eine Rändelung aufweist. Entsprechend einer Ausgestaltung kann diese Rändelung quer zur Umfangsrichtung des Zwischenringes ausgerichtet sein. Eine Kombination dieser Rändelung mit einer weiteren, beispielsweise längs und/oder schräg zur Umfangsrichtung verlaufenden Rändelung ist möglich und liegt im Bereich des Erfindungsgedankens. Durch die Rändelung wird einerseits eine optimale Fixierung des Zwischenringes im Radträger ermöglicht und andererseits über die gesamte Lebensdauer hinweg ein sicherer und zuverlässiger Halt gewährleistet. Diese Fixierungsmöglichkeit ist geeignet zur Vermeidung axialer Ausweichbewegungen des Zwischenringes und zur Vermeidung von Bewegungen in Umfangsrichtung. Zudem ist ein Vorteil darin zu sehen, dass auch hohe Temperaturen im Bereich des Radträgers keinen nennenswerten Einfluss auf den Festsitz der Bauteile haben.

Die Rändelung kann dabei gemäß einer weiteren vorteilhaften Lösung aus verschiedenen Abschnitten bestehen, die sich sowohl in Umfangsrichtung des Zwischenringes betrachtet, als auch quer zur Umfangsrichtung abwechseln können. So ist vorgesehen, dass zusätzlich zu der nur auf einem Teil der Außenmantelfläche des Zwischenringes angeordneten und quer zur Umfangsrichtung des Zwischenringes verlaufenden Rändelung auf einem weiteren Teil der Außenmantelfläche eine längs- und/oder schräg zur Umfangsrichtung des Zwischenringes verlaufende Rändelung vorhanden ist.

Weiterhin besteht eine Lösung nach der Erfindung darin, dass der Außendurchmesser des Zwischenringes auf der beim Einsetzen des Zwischenringes in den Radträger dem Radträger zugewandten Seite geringer ist, als auf der dem Radträger abgewandten Seite. Dies hat den entscheidenden Vorteil, dass beim Einpressen des Zwischenringes in den Radträger entstehende Materialverschiebungen in den Bereich des geringeren Durchmessers des Zwischenringes ausweichen können.

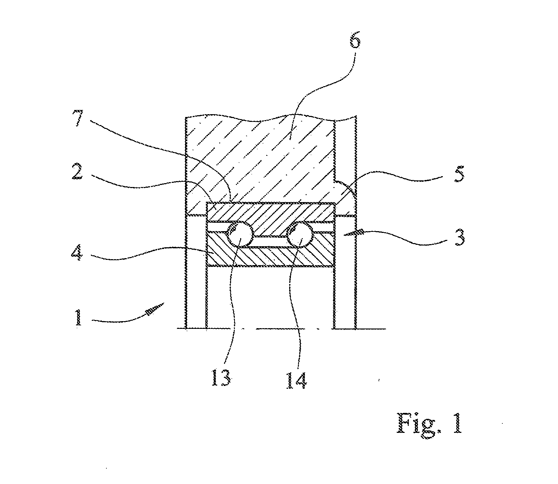

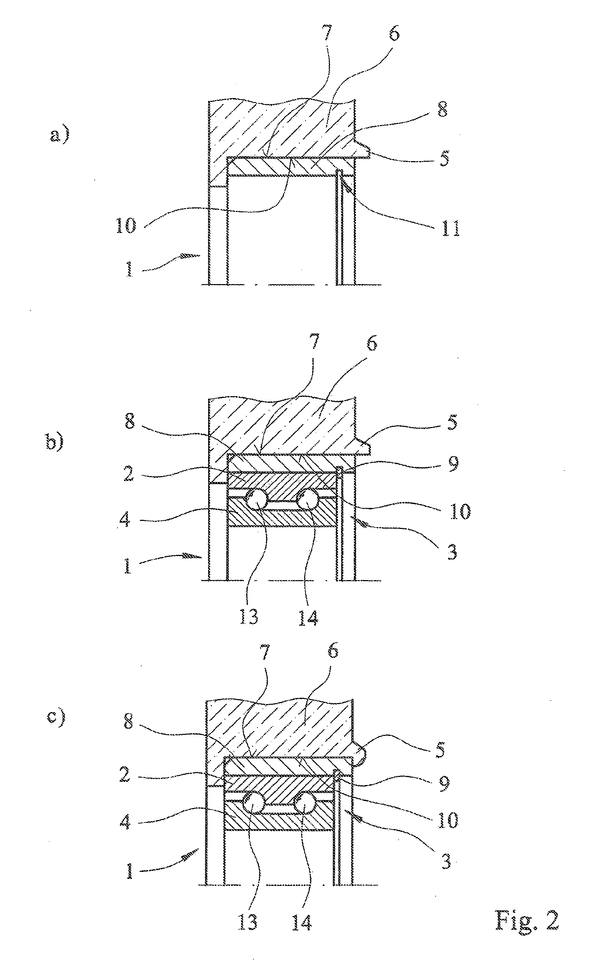

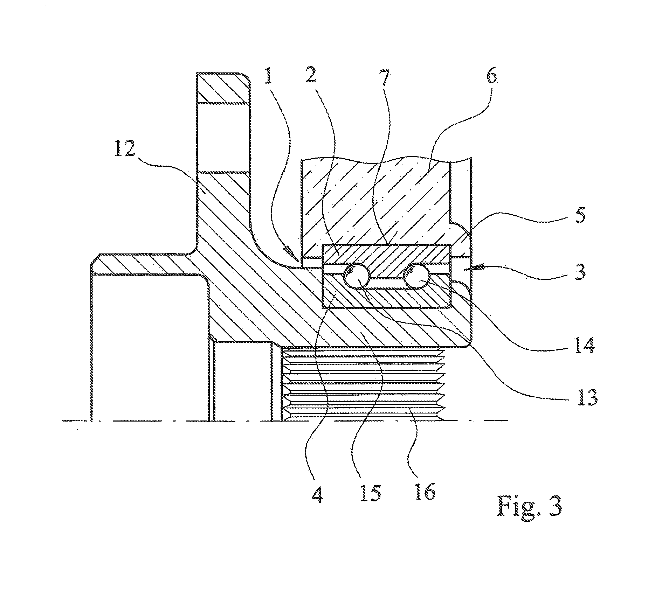

Die Erfindung wird nachfolgend anhand der beigefügten Zeichnungen näher erläutert, wobei die Figuren 1 und 3 nicht der Erfindung entsprechen. Das Ausführungsbeispiel der Figur 2 stellt keine Einschränkung auf die dargestellte Variante dar, sondern dient lediglich der Erläuterung des Prinzips der Erfindung. Um die erfindungsgemäße Funktionsweise veranschaulichen zu können, sind in den Figuren nur stark vereinfachte Darstellungen gezeigt, bei denen auf die für die Erfindung nicht wesentlichen Bauteile oder Elemente verzichtet wurde. Dies bedeutet jedoch nicht, dass derartige Bauteile oder Elemente bei einer erfindungsgemäßen Lösung nicht vorhanden sind.
Es zeigen:
- Figur 1:: einen Teilschnitt durch einen Radträger,
- Figur 2:: einen vereinfachten Stadienplan der Montage eines Radlagers in einem Radträger nach der Erfindung
- Figur 3:: ausschnittsweise einen in ein Kraftfahrzeug eingebauten Radträger.

Der in der Figur 1 dargestellte Radträger 6 besteht vorliegend aus einem leichtmetallischen Werkstoff, nämlich aus Aluminium. Er weist eine Ausnehmung 1 auf, in die eine Nabe 15 eines Radflansches 12 einer Fahrzeugachse einsetzbar ist, was anschaulicher aus der Figur 3 hervorgeht. In die Ausnehmung 1 des Radträgers 6 ist ein Radlager 3 eingesetzt. Dieses Radlager 3 weist in an sich bekannter Weise einen Außenring 2 und einen Innenring 4 auf, die hier über zwei Reihen mit jeweils mehreren Wälzkörpern 13, 14 miteinander verbunden sind, so dass eine Rotationsbewegung des Innenringes 4 relativ zum Außenring 2 ermöglicht ist. Als Wälzkörper 13, 14 dienen im gezeigten Beispiel Kugeln. Das Radlager 3 ist gemäß Figur 1 über einen Presssitz in die Ausnehmung 1 des Radträgers 6 eingesetzt. Hierzu werden der Radträger 6 und das darin einzusetzende Radlager 3 vor dem Zusammenbau thermisch behandelt. Der Außenring 2 des Radlagers 3 liegt nunmehr unmittelbar an der Innenoberfläche 7 der Ausnehmung 1 des Radträgers 6 an. Nach der exakten Positionierung des Radlagers 3 in der Ausnehmung 1 des Radträgers 6 wird der bis dahin bezogen auf die Rotationsachse des Radlagers 3 axial abstehende Randabschnitt 5 des Radträgers 6 umgeformt, so dass er den Außenring 2 des Radlagers 3 gegen eine Ausweichbewegung in axialer Richtung fixiert. Der Umformvorgang des Randabschnittes 5 des Radträgers 6 kann durch ein einfaches Umformverfahren, beispielsweise ein Rollverfahren, erfolgen. Insofern ist der Einbau des Radlagers 3 in den Radträger 6 auf diese Weise sehr einfach gestaltet. Auf der dem Randabschnitt 5 gegenüberliegenden Seite stützt sich der Außenring 2 des Radlagers 3 an einer korrespondierenden Schulter des Radträgers 6 ab.

Die Figur 2 zeigt einen Stadienplan der Montage einer Ausführungsform eines erfindungsgemäßen Radträgers eines Kraftfahrzeuges aus Aluminium. Bei dieser Außführungsform ist zwischen dem Außenring 2 des Radlagers 3 und der Innenoberfläche 7 der Ausnehmung 1 ein Zwischenring 8 aus Stahl eingesetzt.

Im Bildteil a) der Figur 2 ist der Vormontagezustand dargestellt. Hier ist der Zwischenring 8 bereits in die Ausnehmung 1 des Radträgers 6 eingefügt. Bei dem Zwischenring 8 handelt es sich um einen einfachen Stahlring. Seine Außenmantelfläche 10 befindet sich dabei in unmittelbarem Berührungskontakt mit der Innenoberfläche 7 der Ausnehmung 1 des Radträgers 6. Eine Rändelung in diesem Bereich unterstützt den Festsitz und die Fixierung des Zwischenringes 8 in der Ausnehmung 1. In dem entgegen der Montagerichtung des Radlagers 3 äußeren Abschnitt des Zwischenringes 8 weist dieser eine Nut 11 auf, deren Bedeutung nachfolgend erläutert wird.

In dem in Bildteil b) der Figur 2 gezeigten Arbeitsschritt ist das Radlager 3 in den Zwischenring 8 eingefügt worden. Dabei liegt der Außenring 2 des Radlagers 3 unmittelbar an der Innenmantelfläche des Zwischenringes 8 an. Die Nut 11 nimmt einen Sicherungsring 9 auf, der das Radlager 3 zusätzlich im Zwischenring 8 fixiert und zusätzlich ein axiales Auswandern des Radlagers 3 vermeidet.

Im Bildteil c) der Figur 2 ist schließlich der fertig montierte Zustand des erfindungsgemäßen Radträgers dargestellt. Im Unterschied zu dem vorherigen Bildteil b) wurde hier der Randabschnitt 5 des Radträgers 6 derart umgeformt, dass er den Zwischenring 8 in der Ausnehmung 1 des Radträgers 6 fixiert. Zur Umformung kommt ein Rollvorgang zum Einsatz, so dass sich der Umformvorgang vollautomatisch umsetzen lässt. Der Vorteil des Zwischenrings 8 besteht darin, dass das Radlager 3 jederzeit ausgewechselt werden kann, ohne dass eine Zerstörung des Radträgers 6 zu befürchten ist. Hierzu muss lediglich der Sicherungsring 9 gelöst werden und das Radlager 3 kann aus dem zwischenring 8 entfernt werden, um es durch ein neues Radlager 3 zu ersetzen.

Die Figur 3 veranschaulicht ausschnittsweise einen montierten Radträger 6. Dieser nimmt in der bereits im Zusammenhang mit der Figur 1 erläuterten Weise ein Radlager 3 auf, dessen Außenring 2 in dem aus Aluminium gefertigten Radträger 6 mittels des umgeformten Randabschnittes 5 fixiert ist. Der Innenring 4 des Radlagers 3 ist passend auf eine Nabe 15 aufgesetzt, die ihrerseits zusammen mit dem Radlager 3 innerhalb der Ausnehmung 1 des Radträgers 6 angeordnet ist. Die Nabe 15 bildet dabei einen einstückigen Bestandteil eines Radflansches 12 und kann in einer hierfür geeigneten Mittenbohrung 16 beispielsweise die Antriebswelle eines Radantriebes aufnehmen.

### Bezugszeichenliste

- 1.: Ausnehmung
- 2.: Außenring
- 3.: Radlager
- 4.: Innenring
- 5.: Randabschnitt
- 6.: Radträger
- 7.: Innenoberfläche
- 8.: Zwischenring
- 9.: Sicherungsring
- 10.: Außenmantelfläche
- 11.: Nut
- 12.: Radflansch
- 13.: Wälzkörper (Kugel)
- 14.: Wälzkörper (Kugel)
- 15.: Nabe
- 16.: Mittenbohrung

## Patentansprüche

1. Radträger (6) eines Kraftfahrzeuges, welcher aus einem leichtmetallischen Werkstoff, wie Aluminium, besteht, mit einer Ausnehmung (1), welche einen Außenring (2) eines Radlagers (3) aufnimmt, in dessen Innenring (4) eine Nabe (15) eines Radflansches (12) einer Fahrzeugachse einsetzbar ist,
wobei zwischen dem Außenring (2) des Radlagers (3) und der Innenoberfläche (7) der Ausnehmung (1) ein Zwischenring (8) eingesetzt ist,
**dadurch gekennzeichnet, dass** der Zwischenring (8) eine größere Breite aufweist, als das Radlager (3) und das Radlager (3) vollständig aufnimmt, wobei
zur mittelbaren Befestigung des Radlagers (3) der Zwischenring (8) durch die Umformung des Randabschnittes (5) der Ausnehmung (1) fixiert ist und das Radlager (3) zusätzlich durch einen Sicherungsring (9) in dem Zwischenring (8) fixiert ist.

2. Radträger (6) eines Kraftfahrzeuges nach Anspruch 1,
**dadurch gekennzeichnet, dass**
der Zwischenring (8) aus einem im Vergleich zu dem leichtmetallischen Werkstoff des Radträgers (6) höherfesten Material besteht.

3. Radträger (6) eines Kraftfahrzeuges nach Anspruch 1 oder 2,
**dadurch gekennzeichnet, dass**
der Zwischenring (8) aus Stahl besteht.

4. Radträger (6) eines Kraftfahrzeuges nach einem der Ansprüche 1 bis 3,
**dadurch gekennzeichnet, dass**
der Zwischenring (8) mittels einer Übergangs- oder Presspassung in die Ausnehmung (1) des Radträgers (6) eingesetzt ist.

5. Radträger (6) eines Kraftfahrzeuges nach einem der Ansprüche 1 bis 4,
**dadurch gekennzeichnet, dass**
der Zwischenring (8) an seiner Außenmantelfläche (10) eine Rändelung aufweist.

6. Radträger (6) eines Kraftfahrzeuges nach Anspruch 5,
**dadurch gekennzeichnet, dass**,
die Rändelung quer zur Umfangsrichtung des Zwischenringes (8) ausgerichtet ist.

7. Radträger (6) eines Kraftfahrzeuges nach Anspruch 6,
**dadurch gekennzeichnet, dass**,
die Rändelung nur auf einem Teil der Außenmantelfläche (10) des Zwischenringes (8) angeordnet ist und,
zusätzlich zu der nur auf einem Teil der Außenmantelfläche (10) des Zwischenringes (8) angeordneten und quer zur Umfangsrichtung des Zwischenringes (8) verlaufenden Rändelung, auf einem weiteren Teil der Außenmantelfläche (10) eine längs- und/oder schräg zur Umfangsrichtung des Zwischenringes (8) verlaufende Rändelung vorhanden ist.

8. Radträger (6) eines Kraftfahrzeuges nach einem der Ansprüche 6 oder 7,
**dadurch gekennzeichnet, dass**
der Außendurchmesser des Zwischenringes (8) auf der beim Einsetzen des Zwischenringes (8) in den Radträger (6) dem Radträger (6) zugewandten Seite geringer ist, als auf der dem Radträger (6) abgewandten Seite.

## Claims

1. Wheel carrier (6) of a motor vehicle, which is composed of a light metallic material, such as aluminum, with a recess (1) which receives an outer ring (2) of a wheel bearing (3), into the inner ring (4) of which a hub (15) of a wheel flange (12) of a vehicle axle can be inserted, wherein an intermediate ring (8) is inserted between the outer ring (2) of the wheel bearing (3) and the inner surface (7) of the recess (1), **characterized in that** the intermediate ring (8) is wider than the wheel bearing (3) and completely accommodates the wheel bearing (3), wherein, for indirect fixing of the wheel bearing (3), the intermediate ring (8) is fixed by the deformation of the edge section (5) of the recess (1) and the wheel bearing (3) is additionally fixed in the intermediate ring (8) by a securing ring (9).

2. Wheel carrier (6) of a motor vehicle according to Claim 1, **characterized in that** the intermediate ring (8) is composed of a material which is stronger than the light metallic material of the wheel carrier (6).

3. Wheel carrier (6) of a motor vehicle according to Claim 1 or 2, **characterized in that** the intermediate ring (8) is composed of steel.

4. Wheel carrier (6) of a motor vehicle according to one of Claims 1 to 3, **characterized in that** the intermediate ring (8) is inserted into the recess (1) of the wheel carrier (6) by means of a transition fit or press fit.

5. Wheel carrier (6) of a motor vehicle according to one of Claims 1 to 4, **characterized in that** the intermediate ring (8) has a knurling on the outer circumferential surface (10) thereof.

6. Wheel carrier (6) of a motor vehicle according to Claim 5, **characterized in that** the knurling is oriented transversely with respect to the circumferential direction of the intermediate ring (8).

7. Wheel carrier (6) of a motor vehicle according to Claim 6, **characterized in that** the knurling is arranged only on part of the outer circumferential surface (10) of the intermediate ring (8) and, in addition to the knurling which is arranged only on part of the outer circumferential surface (10) of the intermediate ring (8) and runs transversely with respect to the circumferential direction of the intermediate ring (8), there is a knurling on a further part of the outer circumferential surface (10), which knurling runs longitudinally and/or obliquely with respect to the circumferential direction of the intermediate ring (8).

8. Wheel carrier (6) of a motor vehicle according to either of Claims 6 and 7, **characterized in that** the outer diameter of the intermediate ring (8) is smaller on the side facing the wheel carrier (6) when the intermediate ring (8) is inserted into the wheel carrier (6) than on the side facing away from the wheel carrier (6).

## Revendications

1. Support de roue (6) d'un véhicule à moteur, lequel support de roue est constitué d'un matériau métallique léger tel que l'aluminium, comportant un évidement (1) qui reçoit une bague extérieure (2) d'un palier de roue (3), dans la bague intérieure (4) duquel palier de roue peut être inséré un moyeu (15) d'un flasque de roue (12) d'un essieu de véhicule,
une bague intermédiaire (8) étant insérée entre la bague extérieure (2) du palier de roue (3) et la surface intérieure (7) de l'évidement (1),
**caractérisé en ce que** la bague intermédiaire (8) présente une largeur supérieure à celle du palier de roue (3) et reçoit entièrement le palier de roue (3), la bague intermédiaire (8) étant fixée par la déformation de la portion de bord (5) de l'évidement (1) en vue de la fixation indirecte du palier de roue (3), et le palier de roue (3) étant en outre fixé dans la bague intermédiaire (8) par une bague de fixation (9).

2. Support de roue (6) d'un véhicule à moteur selon la revendication 1,
**caractérisé en ce que**
la bague intermédiaire (8) est constituée d'un matériau de plus haute résistance par comparaison avec le matériau métallique léger du support de roue (6).

3. Support de roue (6) d'un véhicule à moteur selon la revendication 1 ou 2,
**caractérisé en ce que**
la bague intermédiaire (8) est constituée d'acier.

4. Support de roue (6) d'un véhicule à moteur selon l'une quelconque des revendications 1 à 3,
**caractérisé en ce que**
la bague intermédiaire (8) est insérée dans l'évidement (1) du support de roue (6) au moyen d'un ajustement de transition ou d'un ajustement serré.

5. Support de roue (6) d'un véhicule à moteur selon l'une quelconque des revendications 1 à 4,
**caractérisé en ce que**
la bague intermédiaire (8) comprend un moletage sur sa surface d'enveloppe extérieure (10).

6. Support de roue (6) d'un véhicule à moteur selon la revendication 5,
**caractérisé en ce que**
le moletage est orienté transversalement par rapport à la direction périphérique de la bague intermédiaire (8).

7. Support de (6) d'un véhicule à moteur selon la revendication 6,
**caractérisé en ce que**
le moletage est situé seulement sur une partie de la surface d'enveloppe extérieure (10) de la bague intermédiaire (8), et **en ce qu'**en plus du moletage situé seulement sur une partie de la surface d'enveloppe extérieure (10) de la bague intermédiaire (8) et s'étendant transversalement par rapport à la direction périphérique de la bague intermédiaire (8), un moletage s'étendant de manière longitudinale et/ou oblique par rapport à la direction périphérique de la bague intermédiaire (8) est présent sur une autre partie de la surface d'enveloppe extérieure (10).

8. Support de roue (6) d'un véhicule à moteur selon l'une quelconque des revendications 6 ou 7,
**caractérisé en ce que**
le diamètre extérieur de la bague intermédiaire (8) du côté tourné vers le support de roue (6) lors de l'insertion de la bague intermédiaire (8) dans le support de roue (6) est inférieur au diamètre extérieur du côté opposé au support de roue (6).
